# EUROPEAN PATENT SPECIFICATION

(11) **EP 3 772 301 B1**
(45) Date of publication and mention of the grant of the patent: **10.05.2023**
(21) Application number: 20187928.5
(22) Date of filing: 27.07.2020
(51) Int. Cl.: A47J 31/46, A47J 31/44

(54) **COFFEE MACHINE**
KAFFEEMASCHINE
MACHINE À CAFÉ

(30) Priority: 07.08.2019 IT 201900014229
(43) Date of publication of application: 10.02.2021
(73) Proprietor: LELIT S.R.L., 25045 Castegnato (Brescia) (IT)
(72) Inventor: EPIS, Mauro, I-25045 Castegnato, BRESCIA (IT)
(74) Representative: Chimini, Francesco

(56) References cited:
- WO-A2-2006/032599
- KR-A- 20140 134 036

## Description

The present invention relates to a coffee machine for household use.

In particular, hereinafter, "coffee machine for household use" will mean the type of machine adapted to dispense an infused beverage, such as coffee, which for its size and use is adapted to be placed in a household environment. That is, the "coffee machine for household use" has a compact size, unlike the coffee machines for bars which have large sizes (comprising, for example, a plurality of filter holders in which the coffee powder is inserted and through which the beverage is dispensed). Moreover, the "coffee machine for household use" has the purpose and is optimized for dispensing of a limited number of coffees, unlike coffee machines for bars specially designed to dispense a large number of coffees, also continuously, throughout the day.

Coffee machines for bars which fit a rotary pump capable of generating a stable pressure of about 9 bar are known in the prior art. Considering the need to maintain constant pressure, despite the high number of dispensed coffees, the rotary pump in coffee machines for bars is cumbersome, so much so that such machines are larger than the coffee machines for household use.

On the other hand, a pump group comprising a vibration pump mounted inside the machine is used instead of the rotary pump in the known coffee machines for household use. Such a vibration pump draws a fluid, preferably water, from a fluid tank inside the machine or directly from the water network. In the case of suction from a tank, the pump must be at a lower height than the free surface of the tank to avoid or at least reduce the risk of cavitation. The output from the vibration pump is fluidly connected to a heater assembly comprising a heat exchanger and/or boiler. In other words, the vibration pump supplies the heater group with fluid at a pressure of between 6 and 12 bar.

The vibration pumps mounted on coffee machines for household use vibrate and oscillate at a frequency of about 35-70 Hz. Furthermore, in addition to the vibration pump, the pump group according to the prior art comprise a hollow shaft which extends along a shaft axis between a suction end and a delivery end opposite to the suction end.

Typically, in the prior art, a support adapted to support the pump group and to absorb the vibrations and the noise due to the operation of the pump itself is mounted at the two opposite sides of the vibration pump, and therefore at said suction end and said delivery end. A further function of the support is the transfer of the residual vibrations to a machine body of a coffee machine for household use. Examples of coffee machines according to the prior art are disclosed in KR20140134036A and WO2006/032599A2.

However, the vibration pump supports according to the prior art transfer a high amount of vibrations to the machine body because they are not able to dampen the pump oscillations. Such non-dampened vibrations result in an oscillation of the cup placed under a dispensing group. In addition to the vibration of the cup, it is worth noting that the vibrations of the machine body are transferred to all other components of the coffee machine for household use. The deleterious effect of vibrations on such mechanical components results in unscrewing, premature wear, damage, fractures, and sudden failure.

It is the object of the present invention to suggest a coffee machine for household use which solves the intended purpose, as claimed in claim 1.

The dependent claims describe preferred embodiments of the invention.

The features and advantages of the coffee machine according to the invention will become apparent from the following description which discloses preferred embodiments, given by way of indicative, non-limiting examples, with reference to the accompanying drawings, in which:

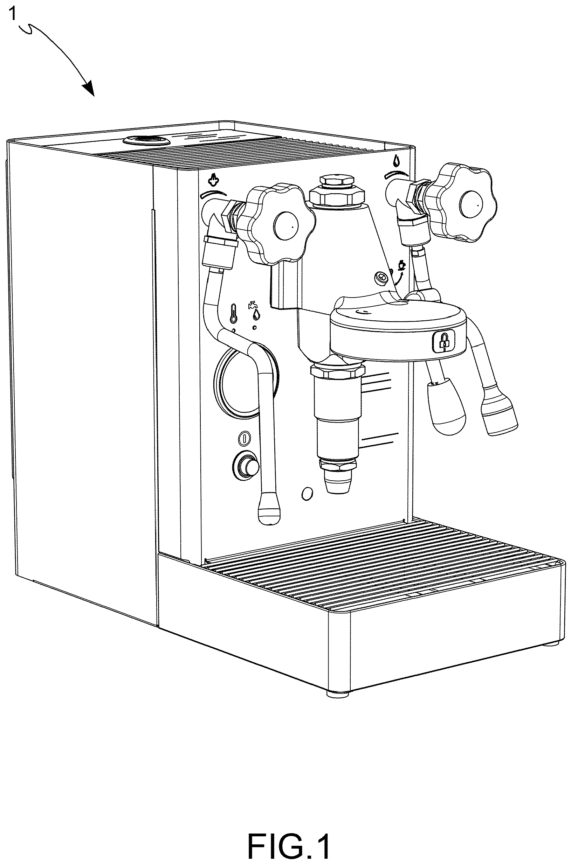

- figure 1 shows a perspective view of a coffee machine for household use;

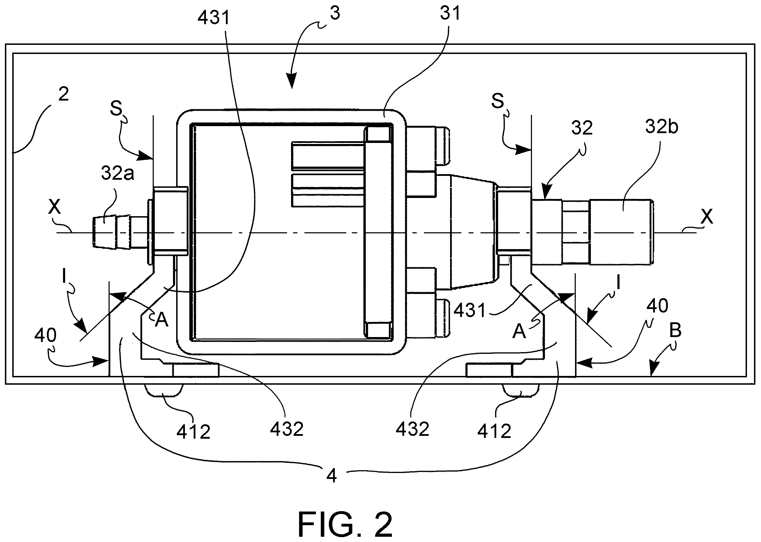

- figure 2 shows a side view of a pump assembly supported by a pair of pump supports in a preferred embodiment;

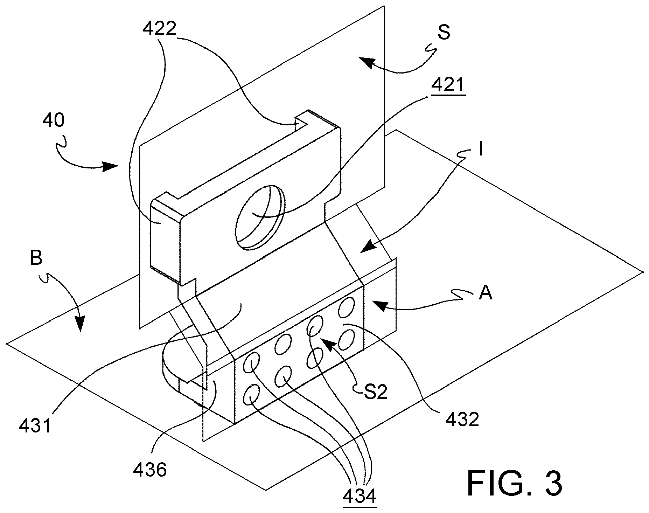

- figure 3 shows a perspective view of a support of the pair of pump supports shown in figure 2,

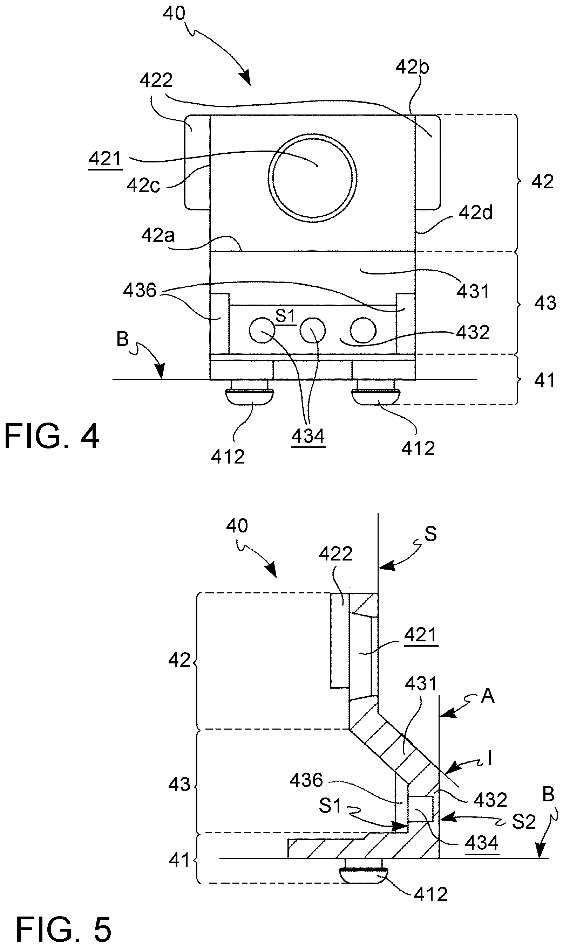

- figure 4 shows a front view of the support in figure 3; and
- figure 5 shows a section view of the support shown in figure 4.

In said drawings, a coffee machine according to the invention is indicated by reference numeral 1 as a whole.

In a preferred embodiment, such a coffee machine comprises: a machine body 2, a pump group 3 and a pair of pump supports 4.

For example, the machine body 2 comprises an outer shell which externally delimits a compartment, in which a plurality of hydraulic and electromechanical components necessary for the operation of the machine is housed. For example, such hydraulic and electromechanical components comprise the pump group 3 and the pair of pump supports 4.

According to the present invention, the pump group 3 comprises a vibration pump 31 and a hollow shaft 32. The hollow shaft extends along a shaft axis X-X between a suction end 32a and a delivery end 32b opposite to the suction end. The vibration pump 31 is mounted on the hollow shaft 32 and is fluidly arranged between said suction end 32a and said delivery end 32b.

According to the present invention, the pair of pump supports 4 comprises two supports 40 axially spaced along the shaft axis X-X. Each support 40 engages either the suction end 32a or the delivery end 32b to support the pump group 3. In other words, the pair of pump supports 4 is positioned on opposite sides of the vibration pump 31.

According to the present invention, each support 40 comprises a base portion 41, a support portion 42, and a connecting portion 43.

According to the present invention, the base portion 41 is engaged with the machine body 2. The support portion 42 extends substantially perpendicular to the shaft axis X-X on a support plane S. Furthermore, a shaft engagement hole 421 in which the hollow shaft 32 is housed is obtained in the support portion 42. Finally, the connecting portion 43 engages both the base portion 41 and the support portion 42.

According to the present invention, the connecting portion 43 comprises a damping region 431 which extends on a junction plane I inclined and incident to the support plane S. For example, the amplitude of the acute angle measured between the junction plane I and the support plane S is about 20-70 degrees, preferably 40-50 degrees.

According to a further embodiment, the damping region 431 is arcuate in shape.

According to an embodiment, the shaft engagement hole 421 is circumferentially delimited by a flaring which creates a lead-in for the insertion of either the suction end 32a or the delivery end 32b. For example, such a flaring extends only for a portion of the depth of the shaft engagement hole 421; in other words, the flaring only concerns the portion of the shaft engagement through-hole 421 which faces the vibration pump 31. A remaining portion of the shaft engagement hole 421, opposite to the portion affected by the flaring, is circumferentially delimited by a cylindrical wall which seamlessly connects to the flaring.

Preferably, the base portion 41 extends on a base plane B substantially parallel to the shaft axis X-X.

According to an embodiment, the connecting portion 43 further comprises a support lightening region 432 which extends substantially orthogonally to the shaft axis X-X along a lightening plane A parallel to the support plane S. Such a support lightening region 432 engages the base portion 41, while the damping region 431 engages the support lightening region 432 and the support portion 42.

According to an embodiment, the base portion 41 is engaged with the connecting portion 43 which, in turn, is engaged with the support portion 42. In particular, the connecting section 43 comprises the support lightening region 432 and the damping region 431. The support lightening region 432 connects the base portion 41 to the damping region 431. On the other hand, the damping region 431 connects the support lightening region 432 to the support portion 42.

According to an embodiment, a plurality of lightening holes 434 are obtained on the support lightening region 432. Such support lightening holes 434 are either blind or through.

According to an embodiment, the support lightening region 432 comprises a first surface S1 facing the vibration pump 31, and a second surface S2 opposite to the first surface S1.

Preferably, the multiple lightening holes 434 are blind and are drilled on the first surface S1 and/or the second surface S2. The term "and/or" means that the blind lightening holes 434 may be drilled either on the first surface S1 or on the second surface S2 or only on the first surface S1 or only on the second surface S2.

According to an embodiment, not shown in the figure, the plurality of lightening holes 434 is obtained in the support portion 42 and/or in the damping region 431.

According to an embodiment, the support portion 42 comprises a pair of reinforcing ribs 422. Such a pair of reinforcing ribs 422 protrudes from the support portion 42 orthogonally to the support plane S and axially to the vibration pump 31. In other words, the pair of reinforcing ribs 422 protrudes in the direction of the vibration pump 31, orthogonally to the support plane S.

Preferably, the support portion 42 is delimited by a lower edge 42a connected to the damping region 431, an upper edge 42b, a first side edge 42c, and a second side edge 42d opposite to the first. In particular, the ribs of said pair of reinforcing ribs 422 are positioned at the first side edge 42c and the second side edge 42d.

According to an embodiment, the base portion 41 comprises at least one foot 412 which projects from the base portion 41 and engaged with the machine body 2. Preferably, at least one foot 412 comprises two feet, at least one of which is engaged in a housing recess in the machine body 2.

According to an embodiment, the base portion 41 is fixed to the machine body 2 by welding or gluing, screws, or a combination thereof.

According to an embodiment, each support 40 of the pair of pump supports 4 is made in one piece.

According to an embodiment, each support 40 is made of a polymer material with a Shore A hardness of 45-80. Preferably, such a polymer material is chosen from the EPDM family.

According to an embodiment, the support lightening region 432 connects the base portion 41 to the damping region 431 and laterally comprises a pair of ribs 436. Preferably, each rib of said pair of ribs 436 protrudes orthogonally to the lightening plane A in the direction of the vibration pump 31. In other words, the support lightening region 432 comprises a base connecting edge which engages the base portion 41, a damping edge which engages the damping region 431, and a pair of side connecting edges which connect the base connecting edge to the damping edge. For example, each rib protrudes from one of the pair of side connecting edges and projects from the lightening plane A axially to the vibration pump 31.

According to an embodiment, the coffee machine further comprises a heater group positioned downstream of pump unit 3 and fluidly connected to such a pump unit 3.

According to an embodiment, the coffee machine further comprises a fluid tank positioned upstream of the pump group 3 and fluidly connected thereto. In this manner, the pump group 3 fluidly connects the fluid tank to the heater group. In particular, the heater group comprises a boiler and/or a heat exchanger.

Preferably, the pump group 3 draws fluid, preferably water, from the fluid tank and pumps it to the heater assembly so that the fluid tank is fluidly connected to the heater group. In particular, the pump unit 3 draws the fluid from the fluid tank through the suction end 32a and pumps such a fluid to the heater group through the delivery end 32b.

According to an embodiment, the pump group 3 is adapted to connect fluidly to a water network from which it draws the fluid to be pumped to the heater group. In this manner, the water network is fluidly connected to the heater assembly through the pump group 3.

Innovatively, the coffee machine for household use according to the present invention achieves the set object by resolving the limits of the prior art.

Advantageously, the coffee machine vibrates less than coffee machines in the prior art. In particular, the machine body receives less vibration by virtue of the presence, in each support, of the connection portion which comprises the damping region. Indeed, such a damping region promotes greater absorption of the vibrations of the pump group and transfers a reduced amount of vibrations to the machine body.

According to an advantageous aspect, the coffee machine is quiet, i.e. it has a lower noise level than the prior art.

According to a further advantageous aspect, the coffee machine is lightweight by virtue of the multiple lightening holes which reduce the weight of each support. In other words, the lightening holes reduce the weight of each support, making it lighter and more flexible, but without embrittling it.

Advantageously, the coffee machine has high torsional strength due to the torque of the reinforcing ribs which protrude from the support portion and increase the torsional stiffness of each support.

According to an advantageous aspect, the coffee machine has a high torsional resistance due to the presence of the pair of ribs which protrude from the support lightening region and which improve the torsional stiffness of each support.

In a further advantageous aspect, the coffee machine exhibits a vibration reduction of about 35-60% compared to the prior art.

Advantageously, the coffee machine offers a significant improvement in vibration absorption by virtue of the pair of pump supports which comprise the damping region lying on the connecting surface and the plurality of lightening holes.

According to an advantageous aspect, compared to coffee machines on the market, in which the vibration pump supports are typically in the shape of an "L" or an inverted "T", in the coffee machine according to the present invention, each support, if observed from the side, has a geometry which substantially follows a broken line (finite set of segments) or a mixed line (finite set of segments and curved lines). In this manner, vibration and noise absorption is improved.

A person skilled in the art may make changes and adaptations to the embodiments of the coffee machine according to the invention or can replace elements with others which are functionally equivalent to meet contingent needs without departing from the scope of protection of the following claims.

## Claims

1. A Coffee machine (1) for household use comprising:
A) a machine body (2);
B) a pump group (3) comprising a vibration pump (31) and a hollow shaft (32) which extends along a shaft axis (X-X) between a suction end (32a) and a delivery end (32b), wherein the vibration pump (31) is mounted on the hollow shaft (32) fluidly disposed between said suction (32a) and delivery (32b) ends;
C) a pair of pump supports (4) axially spaced along the shaft axis (X-X), wherein each support (40) engages one between the suction end (32a) and the delivery end (32b) in a manner to support the pump group (3), and wherein each support (40) comprises:
i) a base portion (41) engaged to the machine body (2) ;
ii) a support portion (42) which extends substantially perpendicular to the shaft axis (X-X) on a support plane (S), in which a shaft engagement hole (421) is made in which the hollow shaft (32) is housed; and
iii) a connecting portion (43) which engages the base portion (41) and the support portion (42), **characterized in that** the connecting portion (43) comprises a damping region (431) which extends on a junction plane (I) inclined and incident to the support plane (S) or arcuate in shape.

2. Coffee machine (1) according to claim 1, wherein the base portion (41) extends on a base plane (B) substantially parallel to the shaft axis (X-X).

3. Coffee machine (1) according to any one of the preceding claims, wherein the connecting portion (43) further comprises a support lightening region (432) which extends substantially orthogonally to the shaft axis (X-X) along a lightening plane (A) parallel to the support plane (S) and which engages the base portion (41), and wherein the damping region (431) engages the support lightening region (432) and the support portion (42).

4. Coffee machine (1) according to claim 3, wherein a plurality of blind or through lightening holes (434) are formed on the support lightening region (432).

5. Coffee machine (1) according to claim 4, wherein the support lightening region (432) comprises a first surface (51) facing the vibration pump (31) and a second surface (S2) opposite to the first surface (S1), the plurality of blind lightening holes (434) being formed on the first surface (S1) and/or on the second surface (S2).

6. Coffee machine (1) according to any one of the preceding claims, wherein the support portion (42) comprises a pair of reinforcing ribs (422) projecting from said support portion (42) orthogonally to the support plane (S) and axially towards the vibration pump (31).

7. Coffee machine (1) according to claim 6, wherein the support portion (42) is delimited by a lower edge (42a) connected to the damping region (431), an upper edge (42b), a first side edge (42c) and a second side edge (42d) opposite the first, wherein the ribs of said pair of reinforcing ribs (422) are positioned at the first (42c) and the second (42d) side edge.

8. Coffee machine (1) according to any one of the preceding claims, wherein the base portion (41) comprises at least one foot (412) projecting from said base portion (41) and engaged to the machine body (2).

9. Coffee machine (1) according to any one of the preceding claims, wherein each support (40) is made in one piece.

10. Coffee machine (1) according to any one of the preceding claims, wherein each support (40) is made of a polymeric material with a shore A hardness of 45-80.

11. Coffee machine (1) according to any one of claims 3-5 or any of claims 6-10 when dependent on claim 3 wherein the support lightening region (432) connects the base portion (41) with the damping region (431) and laterally comprises a pair of ribs (436), each rib of said pair of ribs (436) projecting orthogonally to the lightening plane (A) in the direction of the vibration pump (31).

12. Coffee machine (1) according to any one of the preceding claims, further comprising a heater group positioned downstream of the pump group (3), wherein the pump group (3) is fluidically connected to the heater group.

13. Coffee machine (1) according to claim 12, further comprising a fluid reservoir positioned upstream of the pump group (3), wherein the pump group (3) sucks a fluid, preferably water, from said fluid reservoir and pumps it to the heater group, so as to fluidically connect the fluid reservoir to the heater group.

## Patentansprüche

1. Kaffeemaschine (1) für den Heimgebrauch, umfassend:
A) einen Maschinenkörper (2);
B) eine Pumpengruppe (3), die eine Vibrationspumpe (31) und eine Hohlwelle (32), die sich entlang einer Wellenachse (X-X) zwischen einem Ansaugende (32a) und einem Abgabeende (32b) erstreckt, umfasst, wobei die Vibrationspumpe (31) fluidisch angeordnet zwischen dem Ansaugende (32a) und dem Abgabeende (32b) auf der Hohlwelle (32) montiert ist,
C) ein Paar von Pumpenträgern (4), die entlang der Wellenachse (X-X) axial beabstandet sind, wobei jeder Träger (40) eines von dem Ansaugende (32a) und dem Abgabeende (32b) in einer die Pumpengruppe (3) tragenden Weise in Eingriff nimmt, und wobei jeder Träger (40) Folgendes umfasst:
i) einen Basisabschnitt (41), der mit dem Maschinenkörper (2) in Eingriff ist,
ii) einen Trägerabschnitt (42), der sich im Wesentlichen senkrecht zu der Wellenachse (X-X) in einer Trägerebene (S) erstreckt, in dem eine Welleneingriffsbohrung (421) ausgebildet ist, in der die Hohlwelle (32) aufgenommen ist, und
iii) einen Verbindungsabschnitt (43), der den Basisabschnitt (41) und den Trägerabschnitt (42) in Eingriff nimmt, **dadurch gekennzeichnet, dass** der Verbindungsabschnitt (43) einen Dämpfungsbereich (431) umfasst, der sich in einer Übergangsebene (I) erstreckt, die geneigt und inzident zu der Trägerebene (S) oder bogenförmig ist.

2. Kaffeemaschine (1) nach Anspruch 1, wobei sich der Basisabschnitt (41) in einer Basisebene (B) erstreckt, die im Wesentlichen parallel zu der Wellenachse (X-X) ist.

3. Kaffeemaschine (1) nach einem beliebigen der vorhergehenden Ansprüche, wobei der Verbindungsabschnitt (43) ferner einen Trägerentlastungsbereich (432) umfasst, der sich im Wesentlichen orthogonal zu der Wellenachse (X-X) entlang einer Entlastungsebene (A) erstreckt, die parallel zu der Trägerebene (S) ist, und der den Basisabschnitt (41) in Eingriff nimmt, und wobei der Dämpfungsbereich (431) den Trägerentlastungsbereich (432) und den Trägerabschnitt (42) in Eingriff nimmt.

4. Kaffeemaschine (1) nach Anspruch 3, wobei in dem Trägerentlastungsbereich (432) eine Vielzahl von Sack- oder Durchgangsentlastungsbohrungen (434) gebildet sind.

5. Kaffeemaschine (1) nach Anspruch 4, wobei der Trägerentlastungsbereich (432) eine erste Oberfläche (S1), die der Vibrationspumpe (31) zugewandt ist, und eine zweite Oberfläche (S2) entgegengesetzt zu der ersten Oberfläche (S1) umfasst, wobei die Vielzahl von Sackentlastungsbohrungen (434) in der ersten Oberfläche (S1) und/oder in der zweiten Oberfläche (S2) gebildet sind.

6. Kaffeemaschine (1) nach einem beliebigen der vorhergehenden Ansprüche, wobei der Trägerabschnitt (42) ein Paar von Verstärkungsrippen (422) umfasst, die von dem Trägerabschnitt (42) orthogonal zu der Trägerebene (S) und axial zu der Vibrationspumpe (31) hin vorstehen.

7. Kaffeemaschine (1) nach Anspruch 6, wobei der Trägerabschnitt (42) durch eine Unterkante (42a), die mit dem Dämpfungsbereich (431) verbunden ist, eine Oberkante (42b), eine erste Seitenkante (42c) und eine zweite Seitenkante (42d) entgegengesetzt zu der ersten begrenzt wird, wobei die Rippen des Paars von Verstärkungsrippen (422) an der ersten (42c) und der zweiten (42d) Seitenkante positioniert sind.

8. Kaffeemaschine (1) nach einem beliebigen der vorhergehenden Ansprüche, wobei der Basisabschnitt (41) mindestens einen Fuß (412) umfasst, der von dem Basisabschnitt (41) vorsteht und mit dem Maschinenkörper (2) in Eingriff ist.

9. Kaffeemaschine (1) nach einem beliebigen der vorhergehenden Ansprüche, wobei jeder Träger (40) einstückig ausgebildet ist.

10. Kaffeemaschine (1) nach einem beliebigen der vorhergehenden Ansprüche, wobei jeder Träger (40) aus einem Polymermaterial mit einer Shore-A-Härte von 45-80 hergestellt ist.

11. Kaffeemaschine (1) nach einem beliebigen der Ansprüche 3-5 oder einem beliebigen der Ansprüche 6-10, wenn abhängig von Anspruch 3, wobei der Trägerentlastungsbereich (432) den Basisabschnitt (41) mit dem Dämpfungsbereich (431) verbindet und seitlich ein Paar von Rippen (436) umfasst, wobei jede Rippe des Paars von Rippen (436) orthogonal zu der Entlastungsebene (A) in der Richtung der Vibrationspumpe (31) vorsteht.

12. Kaffeemaschine (1) nach einem beliebigen der vorhergehenden Ansprüche, die ferner eine Heizgruppe umfasst, die stromabwärts von der Pumpengruppe (3) positioniert ist, wobei die Pumpengruppe (3) fluidisch mit der Heizgruppe verbunden ist.

13. Kaffeemaschine (1) nach Anspruch 12, die ferner ein Fluidreservoir umfasst, das stromaufwärts von der Pumpengruppe (3) positioniert ist, wobei die Pumpengruppe (3) ein Fluid, vorzugsweise Wasser, aus dem Fluidreservoir ansaugt und es in die Heizgruppe pumpt, um das Fluidreservoir fluidisch mit der Heizgruppe zu verbinden.

## Revendications

1. Machine à café (1) pour usage domestique comprenant :
A) un corps de machine (2) ;
B) un groupe pompe (3) comprenant une pompe à vibration (31) et un arbre creux (32) qui s'étend le long d'un axe d'arbre (X-X) entre une extrémité d'aspiration (32a) et une extrémité de distribution (32b), la pompe à vibration (31) étant montée sur l'arbre creux (32) disposé de manière fluidique entre lesdites extrémités d'aspiration (32a) et de distribution (32b) ;
C) une paire de supports de pompe (4) axialement espacés le long de l'axe d'arbre (X-X), chaque support (40) venant en prise avec l'une parmi l'extrémité d'aspiration (32a) et l'extrémité de distribution (32b) de manière à supporter le groupe pompe (3), et chaque support (40) comprenant :
i) une partie base (41) en prise avec le corps de machine (2) ;
ii) une partie support (42) qui s'étend de manière sensiblement perpendiculaire à l'axe d'arbre (X-X) sur un plan de support (S) dans lequel est créé un trou de mise en prise d'arbre (421) dans lequel est logé l'arbre creux (32) ; et
iii) une partie de liaison (43) qui vient en prise avec la partie base (41) et la partie support (42), **caractérisée en ce que** la partie de liaison (43) comprend une région d'amortissement (431) qui s'étend sur un plan de jonction (I) incliné et incident par rapport au plan de support (S) ou de forme arquée.

2. Machine à café (1) selon la revendication 1, la partie base (41) s'étendant sur un plan de base (B) sensiblement parallèle à l'axe d'arbre (X-X).

3. Machine à café (1) selon l'une quelconque des revendications précédentes, la partie de liaison (43) comprenant en outre une région d'allègement de support (432) qui s'étend de manière sensiblement orthogonale à l'axe d'arbre (X-X) le long d'un plan d'allègement (A) parallèle au plan de support (S) et qui vient en prise avec la partie base (41), et la région d'amortissement (431) venant en prise avec la région d'allègement de support (432) et la partie support (42).

4. Machine à café (1) selon la revendication 3, une pluralité de trous d'allègement borgnes ou traversants (434) étant formés sur la région d'allègement de support (432).

5. Machine à café (1) selon la revendication 4, la région d'allègement de support (432) comprenant une première surface (S1) faisant face à la pompe à vibration (31) et une deuxième surface (S2) opposée à la première surface (S1), la pluralité de trous d'allègement borgnes (434) étant formés sur la première surface (S1) et/ou sur la deuxième surface (S2).

6. Machine à café (1) selon l'une quelconque des revendications précédentes, la partie support (42) comprenant une paire de nervures de renforcement (422) se projetant depuis ladite partie support (42) orthogonalement au plan de support (S) et axialement vers la pompe à vibration (31).

7. Machine à café (1) selon la revendication 6, la partie support (42) étant délimitée par un bord inférieur (42a) relié à la région d'amortissement (431), un bord supérieur (42b), un premier bord latéral (42c) et un deuxième bord latéral (42d) opposé au premier, les nervures de ladite paire de nervures de renforcement (422) étant positionnées au premier (42c) et au deuxième (42d) bord latéral.

8. Machine à café (1) selon l'une quelconque des revendications précédentes, la partie base (41) comprenant au moins un pied (412) se projetant depuis ladite partie base (41) et en prise avec le corps de machine (2).

9. Machine à café (1) selon l'une quelconque des revendications précédentes, chaque support (40) étant créé d'un seul tenant.

10. Machine à café (1) selon l'une quelconque des revendications précédentes, chaque support (40) étant composé d'un matériau polymère ayant une dureté Shore A de 45-80.

11. Machine à café (1) selon l'une quelconque des revendications 3-5 ou selon l'une quelconque des revendications 6-10 lorsqu'elles dépendent de la revendication 3, la région d'allègement de support (432) reliant la partie base (41) à la région d'amortissement (431) et comprenant latéralement une paire de nervures (436), chaque nervure de ladite paire de nervures (436) se projetant orthogonalement au plan d'allègement (A) dans la direction de la pompe à vibration (31).

12. Machine à café (1) selon l'une quelconque des revendications précédentes, comprenant en outre un groupe dispositif de chauffage positionné en aval du groupe pompe (3), le groupe pompe (3) étant relié de manière fluidique au groupe dispositif de chauffage.

13. Machine à café (1) selon la revendication 12, comprenant en outre un réservoir de fluide positionné en amont du groupe pompe (3), le groupe pompe (3) aspirant un fluide, de préférence de l'eau, depuis ledit réservoir de fluide et le pompant jusqu'au groupe dispositif de chauffage, de façon à relier de manière fluidique le réservoir de fluide au groupe dispositif de chauffage.
